# EUROPEAN PATENT APPLICATION

(11) **EP 0 563 809 A2**
(43) Date of publication of application: **06.10.1993**
(21) Application number: 93105001.7
(22) Date of filing: 26.03.1993
(51) Int. Cl.: G01F 23/68, G01F 23/70, G01F 23/24

(54) **A device for detecting the level of a liquid in a container**

(30) Priority: 01.04.1992 IT TO920294
(71) Applicant: ICEM S.r.l., I-15028 Quattordio (Alessandria) (IT)
(72) Inventor: Cozzo, Gianpiero, I-15028 Quattordio (Alessandria) (IT); Cozzo, Gianni, I-15028 Quattordio (Alessandria) (IT)
(74) Representative: Bosotti, Luciano

(57) **Abstract**

A device for detecting the level of a liquid in a container comprises a substrate (4) on which discrete resistors (5) are mounted and are interconnected by a plurality of metallized regions (6). A movable floating body (8) has electrical contact means (11, 12) which can interact with comb-shaped metallized regions (7) which are connected electrically to the resistors (5) in different ways according to the position of the float (8) so that the electrical contact means (11, 12) detect different resistance values in dependence on the level of the liquid in the container.

## Description

The present invention relates to a device for detecting the level of a liquid in a container, particularly, but not exclusively, for measuring the level of fuel, oil or other liquids in tanks, of the type comprising:
- a substrate with associated electrically resistive means, and
- a movable body which in use is intended to float on the liquid and has electrical contact means which can interact with the electrically resistive means in different ways according to the position of the movable body, so that the electrical contact means detect different resistance values in dependence on the level of the liquid in the container.

Known devices of the type indicated above have substrates made of ceramic material with electrically resistive means formed by the deposition of a continuous resistive film, for example, by thick-film or thin-film technology.

A disadvantage of such known devices is that the substrate, which is usually made of a ceramic material such as alumina in order to give the device sufficient rigidity to prevent alteration of the resistance values of the film deposited thereon, is very fragile and is consequently difficult to handle during manufacture, transportation and assembly. Moreover, in order to ensure that the film adheres perfectly to the substrate, the latter has a very rough surface which causes the sliding contacts which connect the float electrically to the resistive means to wear rapidly.

The object of the present invention is to provide a device for detecting the level of a liquid in a container which overcomes the aforesaid disadvantages and which, in particular, is simple and cheap to produce.

In order to achieve this object, the subject of the invention is a device of the type indicated above, characterized in that the electrically resistive means are constituted by discrete resistors mounted on the substrate.

The need for an extremely rigid substrate is thus eliminated so that any material commonly used for the mounting of electrical components such as, for example, vetronite, mylar, or the like, may be used. Thus, the substrate may have a smooth surface so as to reduce the causes of wear of the sliding contacts which connect the float to the electrically resistive means.

A further advantage is that a smaller number of different resistance values can be used for the discrete resistors with a consequent reduction in production costs and an improvement in control over the tolerances and the quality of the components.

Discrete resistors according to SMD (surface-mounting device) technology, which are smaller than normal carbon resistors, may advantageously be used so as to increase the number of resistors mounted on a substrate of given dimensions in order to achieve better resolution in the reading of the values for the levels of the liquid in the container.

Further characteristics and advantages of the invention will become clear from the description which follows with reference to the appended drawings, provided purely by way of non-limiting example, in which:
Figure 1 is a vertical section of the device according to the present invention, and
Figure 2 is a section taken on the line II-II of Figure 1.

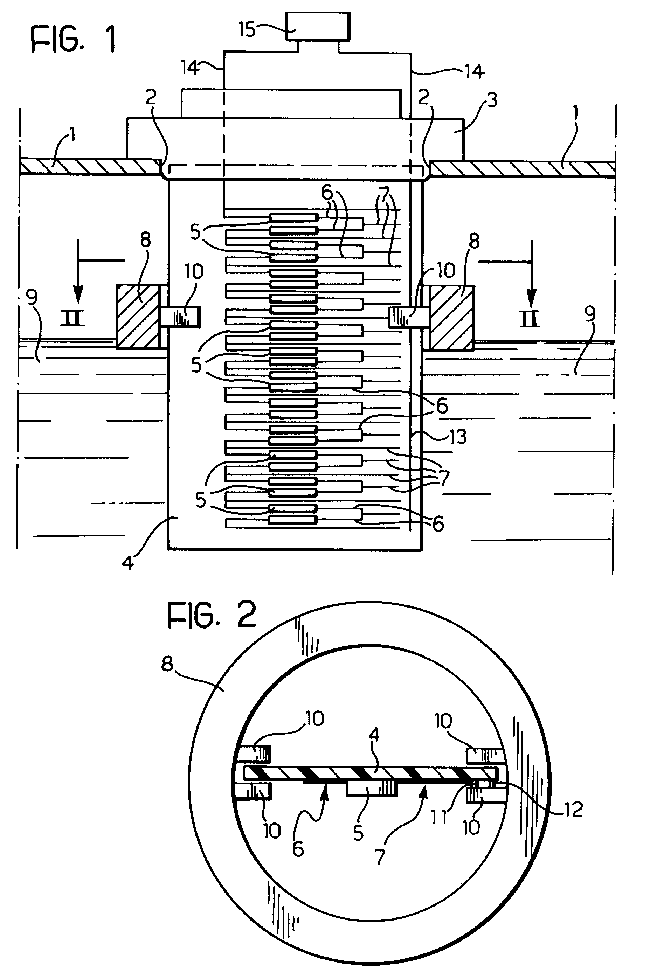

With reference now to Figure 1, a closure plug 3 fitted in a hole 2 in the upper wall 1 of a container for liquid is connected at its lower end to a substrate 4 constituted by a plate of insulating material. An array of discrete resistors 5 is mounted on the substrate 4 and the resistors are connected in series by generally serpentine metallized regions 6 formed on the substrate 4 by any known technique, for example, by the photoengraving of a layer of conductive material applied to one of the surfaces of the substrate 4.

A comb-shaped set of metallized regions 7 extends transverse the substrate 4 towards one of its vertical sides. Each metallized region 7 is electrically connected to a loop of a respective metallized region 6 between each pair of discrete resistors 5. An annular body 8 which can float on the liquid 9 in the container is disposed so as to surround the substrate 4. Four locating elements 10, arranged in two fork-like formations, project from the cylindrical internal surface of the ring 8 and interact with the edges of the substrate 4 so as to allow the ring 8 to slide only vertically relative to the substrate 4 as a result of a change in the level of the liquid 9 on which the ring 8 floats. A projection 11 of conductive material is formed on the locating element 10, facing part of the comb-shaped metallized regions 7 and in contact with the surface of the substrate 4, so as to form a sliding contact which is connected electrically to at least one metallized region 7 which can vary in dependence on the level of the liquid 9. A second projection 12 which is radially outside the projection 11 forms a sliding contact with a metallized collector region 13 extending vertically substantially throughout the height of the substrate 4. The two projections 11 and 12 are connected to each other electrically.

One end of the set of metallized regions 6 and the collector 13 are connected electrically to two output conductors 14 which extend through the plug 3 and are connected to an electronic circuit 15 (of known type) suitable for measuring the value of the resistance between the conductors 14 and/or to an instrument for indicating the resistance value.

As the level of the liquid 9 in the container changes, the float 8 gradually adopts different positions relative to the substrate 4 with the result that the projection 11 gradually makes electrical contact with different metallized regions 7. The electrical circuit formed by the conductors 14, the metallized regions 6, 7 and 13, and by the projections 11 and 12 thus comprises a number of resistors 5 which varies according to the liquid level. In the maximum level position, there will thus be a minimum resistance which will change up to a maximum corresponding to the minimum level position. The electronic circuit 15 and/or the indicator instrument are formed so as to provide an output indicative of the liquid level in dependence on the resistance detected between the conductors 14 by techniques known to experts in the art.

Naturally, the arrangement and number of discrete resistors 5 and of comb-shaped metallized regions 7 may be varied widely in dependence on the dimensions of the substrate 4 and on the need to provide for an adequate number of discrete levels of the liquid 9.

More particularly, the comb-shaped metallized regions 7 may not be spaced equally but their spacings may vary according to the shape of the container of the liquid 9 so as to compensate for the non-linearity of the ratio between the level and the quantity of liquid for containers of non-uniform cross-section.

The discrete resistors 5 may be carbon resistors or resistors of any other type commonly available commercially. In particular, it may be advantageous to use resistors according to SMD technology, which are very small and can be mounted on the substrate 4 automatically in an economically advantageous manner.

Naturally, the principle of the invention remaining the same, the details of construction and forms of embodiment may be varied widely with resepct to those described and illustrated purely by way of example, without thereby departing from the scope of the present invention.

## Claims

1. A device for detecting the level of a liquid in a container, comprising:
- a substrate (4) with associated electrically resistive means (5), and
- a movable body (8) which is intended, in use, to float on the liquid and has electrical contact means (11, 12) which can interact with the electrically resistive means (5) in different ways according to the position of the movable body, so that the electrical contact means (11, 12) detect different resistance values in dependence on the level of the liquid in the container,
characterized in that the electrically resistive means (5) are constituted by discrete resistors mounted on the substrate (4).

2. A device for detecting the level of a liquid according to Claim 1, characterized in that the substrate (4) is made of material with a uniform and smooth surface.

3. A device for detecting the level of a liquid according to Claim 1, characterized in that comb-shaped metallized regions (7) on the substrate (4) are associated with different resistance values of the resistive means (5) for selective connection to a sliding contact (11) carried by the movable body (8).

4. A device for detecting the level of a liquid according to Claim 1, characterized in that the movable body (8) is constituted by an annular body surrounding the substrate (4) and connected slidably thereto.

5. A device for detecting the level of a liquid according to Claims 3 and 4, characterized in that the annular body (8) supports two sliding contacts (11, 12), one (11) for connection to the comb-shaped array of metallized regions (7) and the other (12) for connection to a metallized collector region (13) on the substrate (4), the sliding contacts (11, 12) being connected to each other electrically.
